Europäisches Patentamt

European Patent Office

Office européen des brevets

(19)

(11) Veröffentlichungsnummer : **0 154 807 B1**

(12) **EUROPÄISCHE PATENTSCHRIFT**

(45) Veröffentlichungstag der Patentschrift :
17.08.88

(51) Int. Cl.⁴ : **H 05 B 3/68**

(21) Anmeldenummer : **85101202.1**

(22) Anmeldetag : **06.02.85**

(54) Verfahren zum Überwachen des Kochvorganges in einem Kochgefäss.

(30) Priorität : **17.02.84 DE 3405731**

(43) Veröffentlichungstag der Anmeldung :
**18.09.85 Patentblatt 85/38**

(45) Bekanntmachung des Hinweises auf die Patenterteilung : **17.08.88 Patentblatt 88/33**

(84) Benannte Vertragsstaaten :
**AT BE CH FR GB IT LI LU NL SE**

(56) Entgegenhaltungen :
**EP-A- 0 098 491**
**DE-A- 3 000 593**
**FR-A- 2 341 245**
**FR-A- 2 505 597**

(73) Patentinhaber : **Kurt Wolf & Co. KG**
**Langwiesenweg 67/71**
**D-7547 Wildbad (DE)**

(72) Erfinder : **Andre, Wolfram**
**Eichenweg 7**
**D-7307 Aichwald 4 (DE)**

(74) Vertreter : **Vogel, Georg**
**Hermann-Essig-Strasse 35**
**D-7141 Schwieberdingen (DE)**

EP 0 154 807 B1

## Beschreibung

Die Erfindung betrifft ein Verfahren zum Überwachen des Kochvorganges in einem auf ein Heizelement, insbesondere eine Elektrokochplatte, aufstellbaren Kochgefäß mit einem in Abhängigkeit von der Temperatur in Kochgefäß gesteuerten Signalgeber, mit einem über eine Übertragungseinrichtung mit dem Signalgeber gekoppelten Signalempfänger, der eine Steuerschaltung zur Änderung der Heizleistung des Heizelementes steuert, und mit einem Schalter zum Ein- und Ausschalten der Anordnung gemäß Oberbegriff des Anspruchs 1.

Es sind verschiedene Anordnungen dieser Art bekannt, die sich in der Verwendung unterschiedlicher Sensoren zur Temperaturmessung in den Signalgebern, der verschiedenen Signalbildung und -übertragung zu dem Signalempfänger unterscheiden, wie z. B. die DE-AS 21 61 371, die DE-PS 25 39 746, die DE-OS 31 29 334 und die EP-A-98491 zeigen.

Da das Kochgefäß mit dem Heizelement nicht zwangsweise in Verbindung steht, besteht bei diesen Anordnungen die Gefahr, daß das Kochgefäß auf einem ersten Heizelement aufgestellt ist, ein zweites Heizelement jedoch eingeschaltet ist und aufgeheizt wird. Da für dieses zweite Heizelement der Signalempfänger keine Aufheizung registriert, wird dieses Heizelement stets mit voller Heizleistung betrieben, ohne daß Wärme zur Aufheizung des Kochgefäßes verbraucht wird. Da bei diesem zweiten Heizelement Wärme nur durch Abstrahlung verloren geht, besteht auch die Gefahr, daß dieses Heizelement überlastet wird und « durchbrennt ».

Ähnlich verhält es sich, wenn während eines vorgegebenen Kochprogrammes das Kochgefäß von dem Heizelement genommen und abgestellt wird, ohne den Schalter auszuschalten. Schließlich können bei zwei Heizelementen und vorgegebenen Programmen auch bei vertauschten Kochgefäßen unzulässige Belastungen auftreten.

Es ist Aufgabe der Erfindung, ein Verfahren der eingangs erwähnten Art zu schaffen, bei der während des gesamten Kochvorganges sichergestellt ist, daß beim Aufsetzen des Kochgefäßes auf ein falsches Heizelement, beim Abnehmen eines Kochgefäßes von dem Heizelement während des Kochvorganges bei Beibehaltung der Einschaltung des Schalters und beim vertauschten Aufsetzen mehrerer Kochgefäße auf Heizelemente mit unterschiedlichem oder gleichem Programm keine Überlastung des Heizelementes oder eine unzulässige Überhitzung des Kochgutes auftritt.

Diese Aufgabe wird nach der Erfindung dadurch gelöst, daß mit dem Einschalten des Schalters eine periodische Überwachung des Schaltzustandes der Steuerschaltung des Heizelementes eingeleitet wird, daß zu Beginn jedes Überwachungszyklus festgestellt wird, ob die Steuerschaltung das Heizelement mit voller oder reduzierter Heizleistung eingeschaltet hat, daß beim Feststellen der vollen Heizleistung der zu Beginn des Überwachungszyklus von dem Signalempfänger abgegebene Temperaturwert gespeichert wird, daß am Ende dieses Überwachungszyklus der gespeicherte Temperaturwert mit dem zu diesem Zeitpunkt von dem Signalempfänger abgegebenen Temperaturwert verglichen wird und daß am Ende des Überwachungszyklus zumindest die Steuerschaltung des Heizelementes abgeschaltet wird, wenn dieser Vergleich keinen Temperaturanstieg oder einen Temperaturabfall während des Überwachungszyklus ergeben hat.

Wird bei diesem Verfahren in der Aufheizphase mit voller Heizleistung ein Kochgefäß auf das falsche Heizelement gesetzt, dann wird schon nach dem ersten Überwachungszyklus die Steuerschaltung des Heizelementes abgeschaltet, da am Ende des Überwachungszyklus kein Temperaturanstieg festgestellt wird.

Wird während des Kochvorganges das Kochgefäß von dem geheizten Heizelement entfernt und abgestellt, dann wird aufgrund der dabei auftretenden Abkühlung des Kochgefäßes die Steuerschaltung nach und nach auf volle Heizleistung eingestellt und dadurch im folgenden Überwachungszyklus die Steuerschaltung des Heizelementes abgeschaltet, da die Temperatur nicht mehr ansteigt, sondern bereits abfällt.

Sind zwei Kochgefäße für ein erstes Heizelement zum Warmhalten und für ein zweites Heizelement zum Schnellgaren vorprogrammiert, die Kochgefäße jedoch vertauscht aufgesetzt, dann wird das erste Heizelement nach der Aufheizphase in die Regelphase zum Warmhalten übergehen. Das zweite Heizelement wird nach der Aufheizphase voll weitergeheizt. Das auf dem zweiten Heizelement abgestellte erste Kochgefäß meldet zu heiß für die Regelphase und daher wird die Steuerschaltung des ersten Heizelementes abgeschaltet. Dadurch wird aber das zweite Kochgefäß auf dem ersten Heizelement nicht mehr beheizt. Dies führt zum Ansprechen der Überwachung, da trotz eingeschaltetem zweiten Heizelement die Temperatur im zweiten Kochgefäß nicht ansteigt und die Steuerschaltung für das zweite Heizelement wird bleibend abgeschaltet. Daraufhin kühlt auch das erste Kochgefäß auf dem zweiten Heizelement ab, was wiederum zur vollen Einschaltung der Steuerschaltung des ersten Heizelementes führt. Trotzdem steigt die Temperatur im ersten Kochgefäß nicht, was zur Abschaltung der Steuerschaltung des ersten Heizelementes führt. Dann sind beide Heizelemente bleibend abgeschaltet.

Auch wenn für beide Heizelemente dasselbe Programm vorgegeben ist, werden beide Heizelemente bleibend abgeschaltet, wenn die Kochgefäße vertauscht aufgesetzt werden. Da eine vollkommene Symmetrie in Wassermenge und Kochgutmenge in den beiden Kochgefäßen nicht möglich ist, wird zu irgendeinem Zeitpunkt das erste Kochgefäß eine andere Temperatur annehmen, als das zweite Kochgefäß. Nimmt man an, daß das zweite Kochgefäß zu heiß ist, dann regelt die Steuerschaltung des ersten Heizelementes zurück. Als Folge davon wird für das zweite Kochgefäß die volle Heizleistung eingeschaltet, da ja das zweite Kochgefäß auf dem ersten Heizelement steht und abkühlt. Der weitere Verlauf bis zum vollständigen Abschalten der Steuerschaltungen beider Heizelemente ist wie bei den vertauschten Kochgefäßen mit unterschiedlich vorgegebenem Programm.

Es sind daher alle Fehlermöglichkeiten überwacht und in jedem Fall ist sichergestellt, daß die Überlastung des Heizelementes durch rechtzeitige Abschaltung ihrer Steuerschaltungen verhindert ist und daß das Kochgut in keinem Falle überhitzt wird.

Ist nach einer Ausgestaltung vorgesehen, daß die Steuerschaltung als sogenannte Periodengruppensteuerung ausgebildet ist, die in vorgegebehen Schaltzyklen arbeitet und jeweils zu Beginn des Schaltzyklus die Einschaltdauer für den jeweils folgenden Schaltzyklus vorgibt, dann kann aus dem Steuersignal der Periodengruppensteuerung die Einschaltung des Heizelementes über den gesamten Schaltzyklus schon zu Beginn des Schaltzyklus abgeleitet und das entsprechende Kriterium für die Überwachung gewonnen werden.

Die Ableitung der für die Überwachung und Abschaltung der Steuerschaltung des Heizelementes erforderlichen Kriterien wird nach einer Ausgestaltung so vorgenommen, daß zur Ableitung des Überwachungszyklus ein zentraler Überwachungstaktgeber vorgesehen ist, der mit dem Schalter einschaltbar ist, daß dieser periodisch arbeitende Überwachungstaktgeber zu Beginn jedes Überwachungszyklus die Schaltstellung der Steuerschaltung abfragt und den Signalempfänger zur Abspeicherung von den anstehenden Temperaturen entsprechenden Temperaturwerten in Speichern ansteuerbar ist, daß am Ende jeden Zyklus aus den in den Speichern gespeicherten Temperaturwerten mittels einer Differenzschaltung die Differenz gebildet wird und daß bei keiner oder negativer Differenz am Ende des Überwachungszyklus ein Schaltmittel erregt wird, das die über den Schalter der Anordnung zugeführte Speisespannung abschaltet.

Die Abschaltung kann in einfachster Weise dadurch ausgeführt werden, daß das Schaltmittel mittels eines Kontaktes die Versorgungsleitung zur Steuerschaltung des Heizelementes unterbricht.

Als zweckmäßig hat sich erwiesen, daß der Kontakt auch die Versorgungsspannung für den Überwachungstaktgeber, die Speicher, den Signalgeber und den Signalempfänger abschaltet, damit die gesamte Anordnung strom- und spannungslos ist.

Die Handhabung des Kochgefäßes wird nach einer Ausgestaltung durch die Überwachung nicht beeinträchtigt, wenn vorgesehen ist, daß der Signalempfänger, die Speicher, die Differenzschaltung und der Überwachungstaktgeber dem Heizelement mit der Steuerschaltung fest zugeordnet sind, daß der Signalgeber dem Kochgefäß zugeordnet ist und daß der Signalgeber mittels einer drahtlosen Übertragungseinrichtung mit dem Signalempfänger gekoppelt ist.

Das Verfahren wird besonders einfach, wenn vorgesehen ist, daß der Überwachungszyklus gleich dem Schaltzyklus der Steuerschaltung oder einem Vielfachen desselben und mit diesem synchronisiert ist.

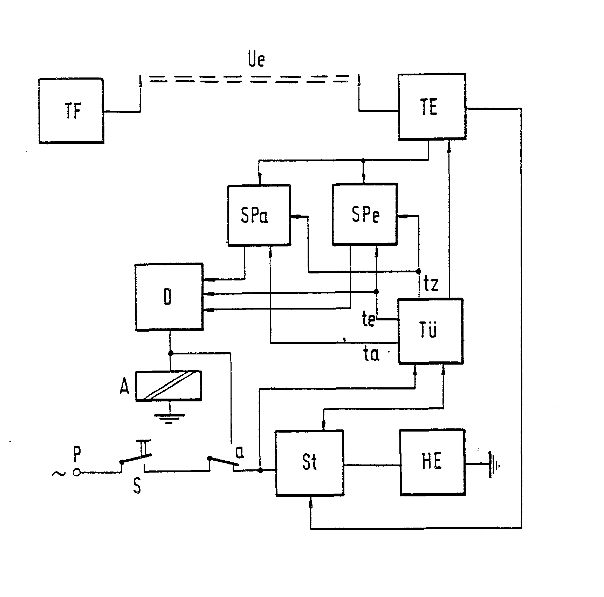

Die Erfindung wird anhand eines in der Zeichnung im Blockschaltbild dargestellten Ausführungsbeispiels näher erläutert.

Der am bzw. im Kochgefäß vorgesehene Sensor ist z. B. ein Temperaturfühler, der als Signalgeber TF über eine drahtlose Übertragungseinrichtung Ue der gemessenen Temperatur entsprechende Signale an den Signalempfänger TE weiterleitet. Dieser Signalempfänger TE ist dem Heizelement HE mit der Steuerschaltung St zugeordnet. An dem Ausgang des Signalempfängers TE werden der gemessenen Temperatur entsprechende Temperaturwerte in digitaler Form abgegeben.

Mit dem Schalter S wird die gesamte Anordnung ein- und ausgeschaltet. Der Schalter S liegt in der Speiseleitung die von der Phase P der Netzwechselspannung zu der Steuerschaltung St und dem Heizelement HE führt. Ist die Steuerschaltung St als Periodengruppensteuerung ausgelegt, dann wird abhängig von dem vom Signalempfänger TE abgegebenen Temperaturwert, die Heizleistung verändert. Dazu gibt die Steuerschaltung am Anfang eines Schaltzyklus die Dauer vor, während der im folgenden Schaltzyklus die Heizung eingeschaltet wird. In der Einschaltzeit arbeitet die Heizung mit voller Heizleistung. An der Steuerschaltung St ist aber schon zu Beginn des Schaltzyklus ein Signal ableitbar, das anzeigt, daß das Heizelement HE während des gesamten folgenden Schaltzyklus mit voller Heizleistung betrieben wird. Dieses Kriterium wird für die Überwachung nach der Erfindung ausgenützt.

Mit dem Einschalten des Schalters S wird der Überwachungstaktgeber Tü in Betrieb genommen, der zu Beginn eines jeden Überwachungszyklus die Steuerschaltung St abfragt, ob die Heizung für den nächsten Schaltzyklus voll eingeschaltet wird. Ist diese Abfrage positiv, dann veranlaßt der Überwachungstaktgeber Tü, daß zu diesem Zeitpunkt ta der am Signalempfänger TE anstehende Temperaturwert Ta in den Speicher SPa eingetragen wird. Bei negativem Ergebnis der Abfrage unterbleibt jede weitere Schaltmaßnahme und die Abfrage wird zu Beginn des nächsten Überwachungszyklus wiederholt. Es ist leicht einzusehen, daß die Anordnung besonders einfach wird, wenn der Überwachungszyklus gleich dem Schaltzyklus der Steuerschaltung St und mit diesem synchronisiert ist. Ist in dem Speicher Spa der Temperaturwert Ta gespeichert, der zu Beginn des Überwachungszyklus vom Signalempfänger TE abgegeben wurde, dann wird am Ende des Überwachungszyklus der zu diesem Zeitpunkt te anstehende Temperaturwert Te in den Speicher Spb übertragen. Die Differenzschaltung D stellt fest, ob keine oder eine negative Differenz auftritt, d. h. ob in dem vergangenen Überwachungszyklus die Temperatur gleich geblieben ist oder ob ein Temperaturabfall eingetreten ist. Dies wird als Kennzeichen dafür gewertet, daß das Kochgefäß nicht die richtige Zuordnung zum Heizelement HE hat. Das Schaltmittel A spricht an und unterbricht mit dem Ruhekontakt des Umschaltekontaktes a die Speiseleitung. Die Steuerleitung St und das Heizelement HE sind abgeschaltet. Auch der Überwachungstaktgeber Tü, die Speicher Spa und Spb, der Signalempfänger TE und die Differenzschaltung D, die dem Heizelement HE zugeordnet sind, werden strom- und spannungslos.

Der Signalgeber TF, der dem Kochgefäß zugeordnet ist, hat eine eigene Stromversorgung, insbesondere eine Batterie, da die Übertragungseinrichtung Ue vorzugsweise drahtlos arbeitet.

Beim Ansprechen des Schaltmittels A wird der Halbstromkreis für dieses Schaltmittel A geschlossen, der über den Arbeitskontakt des Umschaltekontaktes a und den noch geschlossenen Schalter S verläuft. Die Abschaltung des Heizelementes HE bleibt bis zum Abschalten des Schalters S aufrechterhalten. Mit dem erneuten Einschalten des Schalters S beginnt die Überwachung von neuem.

Immer dann, wenn festgestellt wird, daß für den folgenden Schaltzyklus der Steuerschaltung St das Heizelement HE voll eingeschaltet wird, wird die Speicherung der Temperaturwerte Ta und Te zu Beginn und am Ende des Überwachungszyklus vorgenommen und daraus am Ende des Überwachungszyklus die Differenz gebildet. Dabei spielt es keine Rolle, durch welche Fehlermöglichkeiten ein Temperaturanstieg verhindert wurde. Immer dann, wenn sich die Temperatur in einem solchen Überwachungszyklus nicht ändert oder gar abfällt, liegt eine Störung vor und die Steuerschaltung St des Heizelementes HE wird abgeschaltet.

**Patentansprüche**

1. Verfahren zum Überwachen des Kochvorganges in einem auf ein Heizelement, insbesondere eine Elektrokochplatte, aufstellbaren Kochgefäß mit einem in Abhängigkeit von der Temperatur im Kochgefäß gesteuerten Signalgeber, mit einem über eine Übertragungseinrichtung mit dem Signalgeber gekoppelten Signalempfänger, der eine Steuerschaltung zur Änderung der Heizleistung des Heizelementes steuert, und mit einem Schalter zum Ein- und Ausschalten der Anordnung, wobei, mit dem Einschalten des Schalters (S) eine periodische Überwachung des Schaltzustandes der Steuerschaltung (St) des Heizelementes (HE) eingeleitet wird, dadurch gekennzeichnet, daß zu Beginn jedes Überwachungszyklus festgestellt wird, ob die Steuerschaltung (St) das Heizelement (HE) mit voller oder reduzierter Heizleistung eingeschaltet hat, daß beim Feststellen der vollen Heizleistung der zu Beginn des Überwachungszyklus von dem Signalempfänger (TE) abgegebene Temperaturwert (Ta) gespeichert wird, daß am Ende dieses Überwachungszyklus der gespeicherte Temperaturwent (Te) mit dem zu diesem Zeitpunkt von dem Signalempfänger (TE) abgegebenen Temperaturwert (Te) verglichen wird und daß am Ende des Überwachungszyklus zumindest die Steuerschaltung (St) des Heizelementes (HE) abgeschaltet wird, wenn dieser Vergleich keinen Temperaturanstieg oder einen Temperaturabfall während des Überwachungszyklus ergeben hat.

2. Verfahren nach Anspruch 1, dadurch gekennzeichnet, daß die Steuerschaltung (St) als sogenannte Periodengruppensteuerung ausgebildet ist, die in vorgegebenen Schaltzyklen arbeitet und jeweils zu Beginn des Schaltzyklus die Einschaltdauer für den jeweils folgenden Schaltzyklus vorgibt.

3. Verfahren nach Anspruch 1 oder 2, dadurch gekennzeichnet, daß zur Ableitung des Überwachungszyklus ein zentraler Überwachungstaktgeber (Tü) vorgesehen ist, der mit dem Schalter (S) einschaltbar ist, daß dieser periodisch arbeitende Überwachungstaktgeber (Tü) zu Beginn jedes Überwachungszyklus die Schaltstellung der Steuerschaltung (St) abfragt und den Signalempfänger (TE) zur Abspeicherung von den anstehenden Temperaturen entsprechenden Temperaturwerten (Ta, Te) in Speichern (SPa, SPe) ansteuerbar ist, daß am Ende jedes Zyklus aus den in den Speichern (SPa, SPe) gespeicherten Temperaturwerten (Ta, Te) mittels einer Differenzschaltung (D) die Differenz gebildet wird und daß bei keiner oder negativer Differenz am Ende des Überwachungszyklus ein Schaltmittel (A) erregt wird, das die über den Schalter (S) der Anordnung zugeführte Speisespannung (P) abschaltet.

4. Verfahren nach Anspruch 3, dadurch gekennzeichnet, daß das Schaltmittel (A) mittels eines Kontaktes (a) die Versorgungsleitung zur Steuerschaltung (St) des Heizelementes (HE) unterbricht.

5. Verfahren nach Anspruch 3 und 4, dadurch gekennzeichnet, daß der Kontakt (a) auch die Versorgungsspannung für den Überwachungstaktgeber (Tü), die Speicher (Spa, Spb), den Signalgeber (TF) und den Signalempfänger (TE) abschaltet.

6. Verfahren nach einem der Ansprüche 1 bis 5, dadurch gekennzeichnet, daß der Signalempfänger (TE), die Speicher (SPa, SPe), die Differenzschaltung (D) und der Überwachungstaktgeber (Tü) dem Heizelement (HE) mit der Steuerschaltung (St) fest zugeordnet sind, daß der Signalgeber (TF) dem Kochgefäß zugeordnet ist und daß der Signalgeber (TF) mittels einer drahtlosen Übertragungseinrichtng (Ue) mit dem Signalempfänger (TE) gekoppelt ist.

7. Verfahren nach einem der Ansprüche 2 bis 6, dadurch gekennzeichnet, daß der Überwachungszyklus gleich dem Schaltzyklus der Steuerschaltung (St) oder einem Vielfachen desselben und mit diesem synchronisiert ist.

8. Verfahren nach einem der Ansprüche 4 bis 7, dadurch gekennzeichnet, daß das Schaltmittel (A) einen Haltestromkreis aufweist, der über einen eigenen Arbeitskontakt (a) und den geschlossenen Schalter (S) verläuft.

## Claims

1. A method for controlling the cooking process in a cooker which can be placed on a heating element, especially a cooking plate, with a controlled sensor dependent on the temperature in the cooker with a receiver coupled with the sensor via transmission device which controls a control circuit for the modification of the heating power of the heating element, and with a switch for the switching on and off of the system, whereby when switching on the switch (S) a periodical monitoring of the circuit state of the control circuit (St) of the heating element (HE) is started, characterized by the fact, that at the beginning of each monitoring cycle it is stated whether the control circuit (St) has switched on the heating element (HE) at full or reduced heating power, when the full heating power has been stated, the temperature value supplied (Ta) at the beginning of the monitoring cycle by the signal receiver (TE) is memorized ; at the end of this monitoring cycle the memorized temperature (Te) is compared with the temperature (Ta) supplied at this moment by the signal receiver (Te) and at the end of the monitoring cycle at least the control circuit (St) of the heating element (HE) is shut off if no rise or decrease in temperature during the monitoring cycle resulted from this comparison.

2. Method according to claim 1, characterized by the fact, that the control circuit (St) is a so called cycle group control which runs during preset operating cycles and always, at the beginning of the operating cycle, presets the operating time for the following operating cycle respectively.

3. Method according to claim 1 or 2, characterized by the fact, that for the derivation of the monitoring cycle a central clock-pulse generator (Tü) is provided which can be switched on by means of the switch (S), this clock-pulse generator (Tü) with cycle operation scans the position of the control circuit at the beginning of each monitoring cycle and controls the signal receiver (TE) in order to memorize the temperatures measured (Ta, Te) in the storages (SPa, SPe), at the end of each cycle the difference is made out of the temperature values (Ta, Te) memorized in the storages (SPa, SPe) by means of a differential circuit (D) and with no or negative difference at the end of the monitoring cycle a switching element (A) is excited which switches off the supply voltage (P) of the system via the switch (S).

4. Method according to claim 3, characterized by the fact, that the switching element (A) interrupts by means of a contact (a) the supply line to the control circuit (St) of the heating element (HE).

5. Method according to claim 3 and 4, characterized by the fact that the contact (a) switches also off the supply voltage for the clock-pulse generator (Tü), the storages (Spa, Spb), the sensor (TF) and the signal receiver (TE).

6. Method according to claim 1 to 6, characterized by the fact, that the signal receiver (TE), the storages (SPa, SPe), the differential circuit (D) and the clock-pulse generator (Tü) are firmly allocated to the heating element (HE) with the control circuit (St), the sensor (TF) is allocated to the cooker and the sensor (TF) is coupled with the signal receiver (TE) by means of a wireless transmission device.

7. Method according to claim 2 to 6, characterized by the fact, that the monitoring cycle is identical with the operating cycle of the control circuit (St) or with multiple of this operating cycle or is synchronised with it.

8. Method according to claim 4 to 7, characterized by the fact, that the switching element (A) shows a holding current circuit via a separate make contact element (a) and the closed switch (S).

## Revendications

1. Procédé pour surveiller les phases de cuisson, ou le processus de cuisson, dans un récipient de cuisson pouvant être placé sur un élément chauffant, en particulier une plaque électrique de cuisson, le dispositif utilisé comprenant un émetteur de signaux, commandé en fonction de la température régnant dans le récipient de cuisson, un récepteur de signaux relié par l'intermédiaire d'un dispositif de transmission à l'émetteur de signaux et commandant un circuit de commande pour modifier la puissance de chauffage de l'élément chauffant, ainsi qu'un interrupteur pour mettre en et hors circuit le dispositif, procédé dans lequel, lors de la mise en circuit, par fermeture de l'interrupteur (S), on enclenche une surveillance périodique de l'état de commutation du circuit (St) de surveillance et de réglage de l'élément chauffant (HE), procédé caractérisé en ce, qu'au début de chaque cycle de surveillance, il est établi si le cycle (St) de commande et de réglage de l'élément chauffant (HE) a fait fonctionner cet élément chauffant à pleine puissance ou à puissance réduite ; et, lorsqu'il est établi que l'on opère en pleine puissance de chauffage, la valeur (Ta) de la température indiquée par le récepteur (TE) de signaux au début du cycle de surveillance est mise en mémoire, la valeur (Te) de la température mise en mémoire à la fin du cycle de surveillance est comparée avec la valeur (Te) de température indiquée par le récepteur (TE) de signaux à cet instant précis, et à la fin du cycle de surveillance au moins le circuit (St) de commande de l'élément chauffant (HE) est mis hors service, quand cette comparaison a indiqué qu'il n'y a pas eu d'élévation de la température ou qu'il y a même eu une chute de la température pendant le cycle de surveillance.

2. Procédé selon la revendication 1, caractérisé en ce que, le circuit (St) de commande et de réglage est réalisé sous forme de ce que l'on appelle une commande par groupes de périodes, qui fonctionne en des cycles prédéterminés de fonctionnement de circuit et indique à l'avance, à chaque fois, au début du cycle de fonctionnement du circuit la durée de maintien en circuit pour le cycle immédiatement suivant de fonctionnement du circuit de commande.

3. Procédé selon la revendication 1 ou 2, caractérisé en ce que, pour obtenir par dérivation le cycle de surveillance, il est prévu la présence d'une horloge (Tü) centrale de surveillance, qui peut être mise en service avec l'interrupteur (S), en ce que cette horloge (Tü) de surveillance, à fonctionnement périodique, demande au début de chaque cycle de surveillance quelle est la position de commutation du circuit (St) de commande, et l'horloge peut être commandée par le récepteur (TE) de signaux pour commencer à introduire dans les mémoires (SPa, SPe) les valeurs (Ta, Te) de la température correspondant aux températures existant alors, en ce que, à la fin de chaque cycle, il est formé, à partir des valeurs (Ta, Te) de température introduites dans les mémoires (SPa, SPe), à l'aide d'un circuit différenciateur (D), la différence entre ces valeurs, et en ce que, si la différence est nulle ou négative à la fin du cycle de surveillance, un organe (A) de commutation est excité et arrête, par l'intermédiaire de l'interrupteur (S), l'acheminement de la tension électrique (P) d'alimentation du dispositif.

4. Procédé selon la revendication 3, caractérisé en ce que l'orange (A) de commutation interrompt, par l'intermédiaire d'un contact (a), le circuit alimentant le circuit (St) de réglage et de commande de l'élément chauffant (HE).

5. Procédé selon les revendications 3 et 4, caractérisé en ce que le contact (a) interrompt également l'alimentation en tension électrique de l'horloge (Tü) de surveillance, des mémoires (Spa, Spb), de l'émetteur (TF) de signaux et du récepteur (TE) de signaux.

6. Procédé selon l'une des revendications 1 à 5, caractérisé en ce que le récepteur (TE) de signaux, les mémoires (Spa, Spe), le circuit différenciateur (D) et l'horloge (Tü) de surveillance sont en permanence associés, par le circuit (St) de commande et de réglage, à l'élément chauffant (HE), en ce que l'émetteur (TF) de signaux est associé au récipient de cuisson et en ce que l'émetteur (TF) de signaux est associé, par l'intermédiaire d'un dispositif (Ue) de transmission sans fil, au récepteur (TE) de signaux.

7. Procédé selon l'une des revendications 2 à 6, caractérisé en ce que, le cycle de surveillance a la même durée que le cycle de fonctionnement du circuit (St) de commande ou en est un multiple et il est synchronisé avec lui.

8. Procédé selon l'une des revendications 4 à 7, caractérisé en ce que l'organe (A) de commutation présente un circuit à courant d'arrêt, qui fonctionne grâce à un contact (a) propre de travail et à l'interrupteur (S) fermé.